# EUROPÄISCHE PATENTSCHRIFT

(11) **EP 2 496 638 B1**
(45) Veröffentlichungstag und Bekanntmachung des Hinweises auf die Patenterteilung: **21.12.2016**
(21) Anmeldenummer: 10771776.1
(22) Anmeldetag: 03.11.2010
(51) Int. Cl.: C08K 5/49, C08K 5/50, C08K 5/523, C08L 69/00

(54) **PLATTEN AUS POLYCARBONAT MIT VERBESSERTER FLAMMWIDRIGKEIT**
POLYCARBONATE PLATES WITH IMPROVED FLAME RESISTANCE
PLAQUES EN POLYCARBONATE À IGNIFUGEAGE AMÉLIORÉ

(30) Priorität: 05.11.2009 DE 102009052043
(43) Veröffentlichungstag der Anmeldung: 12.09.2012
(73) Patentinhaber: Covestro Deutschland AG, 51373 Leverkusen (DE)
(72) Erfinder: MEYER, Alexander, 40489 Düsseldorf (DE); KRAUTER, Berit, 51379 Opladen (DE); RÜDIGER, Claus, 47829 Krefeld (DE); BLASCHKE, Ulrich, 47829 Krefeld (DE); SCHWARZ, Peter, 47800 Krefeld (DE)
(74) Vertreter: Levpat
(86) Internationale Anmeldenummer: PCT/EP2010/066731
(87) Internationale Veröffentlichungsnummer: WO 2011/054862

(56) Entgegenhaltungen:
- EP-A1- 0 700 969
- US-B1- 6 969 745
- US-B2- 7 303 810

## Beschreibung

Die vorliegende Erfindung betrifft flammwidrige Platten aus Polycarbonat, welche sich dadurch auszeichnen, ihre Flammschutz-Eigenschaften auch nach längerer Außenbewitterungsdauer zu erhalten.

Flammfest ausgerüstete Kunststoffformmassen werden für eine Vielzahl von Anwendungen eingesetzt. Typische Einsatzgebiete solcher Kunststoffe sind die Elektrotechnik und Elektronik, wo sie unter anderem zur Herstellung von Trägern spannungsführender Teile oder in Form von Fernseh-und Monitorgehäusen eingesetzt werden. Aber auch im Bereich der Innenverkleidungen von Schienenfahrzeugen oder Flugzeugen haben flammwidrig ausgerüstete Kunststoffe ihren festen Platz gefunden. Hierbei müssen die verwendeten Kunststoffe neben guten Flammschutzeigenschaften auch weitere positive Eigenschaften auf hohem Niveau zeigen. Hierzu gehören unter anderem mechanische Eigenschaften, wie zum Beispiel eine hohe Schlagzähigkeit sowie eine hinreichende Langzeitstabilität gegenüber thermischer Beanspruchung oder aber gegenüber einer möglichen Schädigung durch Lichteinwirkung. Hierbei ist eine solche Kombination an Eigenschaften nicht immer einfach zu erreichen. Zwar lässt sich in Kunststoffen mit Hilfe von Flammschutzmitteln in der Regel die gewünschte Flammwidrigkeit einstellen. Oft sind hierfür jedoch verhältnismäßig hohe Mengen erforderlich, was rasch zu einer drastischen Verschlechterung übriger Eigenschaften wie z.B. der Mechanik führt. Weitere Additive wie z.B. Farbmittel, Füllstoffe, Pigmente können ebenfalls zu einer Verschlechterung der Flammschutzeigenschaften führen.

Neben dem Einfluss des Basismaterials, wie z.B. des Polycarbonats sowie dem Einfluss oben genannter Additive kommt als weitere die Flammschutzeigenschaften bestimmende Größe die Form bzw. die Art des betreffenden Fertigteils hinzu. Es kann von Bedeutung sein, ob es sich bei dem Endprodukt um ein Extrudat oder Spritzgusskörper handelt. Die Form und Größe bestimmen ebenfalls die Brandeigenschaften. So kann es eine Rolle spielen, ob ein Artikel eher kompakt, geometrisch anspruchsvoll, leicht oder schwer ausgeführt ist. Durch die Konstruktion des betreffenden Artikels werden so schnelles Verlöschen oder das Abtropfverhalten im Brandfall beeinflusst. Die vorliegende Erfindung betrifft Polycarbonat-Platten in massiver Ausführung oder als Einfach- oder Mehrfach-Stegplatten. Bei diesen Platten, welche vor allem im Bau und Konstruktionsbereich ihre Anwendung finden, sind im Allgemeinen andere Tests als im Spritzgussbereich von Bedeutung. Diese Tests, wie z.B. die Klassifikation im Brandschachttest nach DIN 4102, entscheidet im Bau- und Konstruktionsbereich den jeweiligen Anwendungsbereich der Platte. Deshalb steht bei der vorliegenden Erfindung der Brandschachttest als wichtiger für den Konstruktions- und Baubereich entscheidender Test im Vordergrund. Andere Tests, wie z.B. der UL-Test, welcher beispielsweise für Anwendungen im Elektro- und Elektronikbereich sowie in der Informationstechnologie bedeutend ist, beschreiben u.a. das Abtropfverhalten eines Artikels, häufig aus dem Spritzgussbereich, und sind für den Bau- und Konstruktionsbereich nicht maßgeblich oder nur von untergeordneter Bedeutung.

Formteile aus Bisphenol A Polycarbonat sind schwer entflammbar und können bereits ohne spezielle flammhemmende Additive die Klassifizierung V 2 gemäß "Underwriters Laboratories Subject 94" (UL) erzielen. Mit flammhemmenden Additiven oder Halogenadditiven oder Antidrippingmitteln wird die Klassifizierung V0 nach UL Subject 94 erzielt.

Wie oben beschrieben, werden jedoch insbesondere für extrudierte Artikel für den Einsatz im Baubereich spezielle Tests gefordert. Die für die Bundesrepublik Deutschland verbindliche Norm DIN 4102 teilt die Baustoffe nach ihrem Brandverhalten in folgende Klassen ein: Baustoffklasse A nicht brennbar, Baustoffklasse B1 schwer entflammbar, Baustoffklasse B2 normal entflammbar, Baustoffklasse B3 leicht entflammbar. Brennbare Baustoffe werden in die Klasse B1 eingestuft, wenn sie die Prüfung im Brandschacht gemäß DIN 4102 bestehen.

Viele Polycarbonatplatten werden im Außenbereich eingesetzt und erfüllen je nach Anforderung zu Beginn die jeweilige geforderte Brandschutznorm. Massivplatten bis 4 mm Dicke oder Stegplatten und Profile aus Bisphenol A-Polycarbonat können zum Teil auch ohne den Einsatz von Flammschutzmitteln im Brandschachttest ein B1 erreichen. Es hat sich allerdings gezeigt, dass diese Platten, welche den jeweiligen Außenbedingungen ausgesetzt sind, ihre Flammschutzeigenschaften mit der Zeit verändern, so dass eine B1-Klassifizierung in vielen Fällen nicht mehr erreicht werden kann. Dies wurde z.B. in EP-A 0120394 beschrieben. Es ist wichtig, dass die Platten ihre Flammschutzeigenschaften auch nach längerer Außenbewitterungsdauer nicht oder nur unwesentlich verändern. So sollte auch nach einer gewissen Außenbewitterungsdauer der Brandschachtest mit dem gleichen Brandergebnis erfüllt werden wie mit der frisch hergestellten Platte. Aus diesem Grunde wird für die Erteilung einer Brandklasse nach DIN 4102 auch eine Außenbewitterung des zu beurteilenden Plattentyps verlangt. Erst wenn nach dieser Zeit das Brandergebnis unverändert zum Ausgangstest ist, wird das entsprechende Brandzertifikat vom Deutschen Institut für Bautechnik (DIBt) erteilt. Der Erhalt der Flammschutzeigenschaften ist also sehr wichtig; jedoch fand dieser Zusammenhang in der Vergangenheit wenig Aufmerksamkeit und wurde nicht weiter untersucht und deshalb in Publikationen häufig auch nicht weiter beschrieben.

Häufig haben sich halogenhaltige Flammschutzmittel für den Einsatz in Polycarbonatplatten bewährt und sind den Phophor-haltigen Flammschutzmitteln regelmäßig überlegen. Dies ist z.B. in JP-A 62199654 beschrieben. Hier werden Tetrabrombisphenol A Oligomere eingesetzt. Beispiele für diese bromierte Verbindungen wie bromierte Oligocarbonate sind z.B. Tetrabrombisphenol-A oligocarbonat BC-52^{®}, BC-58^{®}, BC-52HP^{®} der Firma Chemtura. Desweiteren sind Polypentabrombenzylacrylate (z.B. FR 1025 der Firma Dead Sea Bromine (DSB)), oligomere Umsetzungsprodukte aus Tetrabrom-bisphenol-A mit Expoxiden (z.B. FR 2300^{®} und 2400^{®} der Firma DSB), oder bromierte Oligo- bzw. Polystyrole (z.B. Pyro-Chek^{®} 68PB der Firma Ferro Corporation, PDBS 80^{®} und Firemaster^{®} PBS-64HW der Firma Chemtura) zu nennen.

Jedoch verlieren auch Platten, die diese normalerweise überlegenen halogenhaltigen Flammschutzmittel enthalten, nach Bewitterung ihre anfangs guten flammwidrigen Eigenschaften.

Ausgangspunkt für die vorliegende Erfindung war somit die Aufgabe, Platten aus Polycarbonat für den Bau- und Konstruktionsbereich zur Verfügung zu stellen, welche auch nach längerer Außenbewitterung ihre Klassifizierung im Brandschachttest erhalten bzw. nicht wesentlich verändern.

Für Polycarbonat wird eine Vielzahl von Flammschutzmitteln verwendet. Dabei kann es sich sowohl um halogenhaltige Produkte als auch um halogenfreie Additive handeln. Als Additive können zudem Salze, welche häufig Fluor-haltig sind, eingesetzt werden. Aus der Vielzahl der Additive lässt sich für den Fachmann nicht erkennen, welches Additiv oder welche Additivmischung den Flammschutz auch nach längerer Außenbewitterungszeit effektiv erhält. Zudem ist zu beachten, dass bestimmte Flammschutzmittel aufgrund ihrer hohen Kosten nicht bzw. nur sehr untergeordnet im Konstruktions- oder Baubereich eingesetzt werden können. So ist z.B. der Einsatz fluorierter anorganische Salze wie z.B. Perfluoralkansulfonsäure-Salze mit hohen Kosten verbunden. Solche Additive werden daher kaum im genannten Marktsegment eingesetzt. Der Kostenaspekt ist also ebenfalls ein wesentliches Kriterium, damit die technische Lösung auch wirtschaftlich genutzt werden kann.

Es ist bekannt, dass Polycarbonatplatten ihre Flammschutzeigenschaften nach einer gewissen Außenbewitterungsdauer verändern. EP-A 0120394 beschreibt beispielsweise Polycarbonatzusammensetzungen mit aromatischen Polyestern, die bei Platten eine verbesserte Flammwidrigkeit nach Außenbewitterung aufweisen. Aromatische Polyester basierend auf Terephthalsäure und aliphatischen Diolen beeinflussen bei Einsatz im Polycarbonat jedoch häufig die optischen Eigenschaften wie z.B. die Transmission. Ferner können diese Platten ihre optischen Eigenschaften während der Außenbewitterung insbesondere hinsichtlich der Vergilbung verändern. Außerdem können diese Mischungen bei hohen Verarbeitungstemperaturen zu Umesterung neigen. Aus diesen Gründen ist es wünschenswert, Platten ohne oder nur mit geringem Polyesterzusatz zu verwenden. Für die vorliegende Erfindung ist der Einsatz von Polyestern unnötig.

Die US-A 2003/0069338 offenbart in diesem Zusammenhang flammgeschützte Formmassen, welche synergistische Kombinationen aus Cyanacrylaten und Flammschutzmitteln enthalten. Die so ausgerüsteten Formmassen zeichnen sich durch eine verbesserte Flammwidrigkeit und eine verbesserte Witterungsstabilität aus. Die in US-A 2003/0069338 genannten Zusammensetzungen umfassen unter anderem perfluorierte Salze, Silicone und bestimmte UV- Absorber. Diese Inhaltsstoffe eignen sich aufgrund des hohen Preises nur begrenzt für den kommerziellen Einsatz im Konstruktions- und Baubereich der Platten. Gleiches gilt für die WO 01/83606, in der Perfluorosulfonate und cyclische Siloxane als Flammschutzmittel für Polycarbonat vorgeschlagen werden. Ferner bezieht sich der Ausdruck Witterungsstabilität in der US-A 2003/0069338 auf den Schutz vor Vergilbung und nicht auf den Erhalt der Flammschutzeigenschaften.

Auch die JP-A 2007031583, JP-A 2006335893, JP-A 2007191499 und die JP-A 2008222813 beschreiben Platten aus Polycarbonat enthaltend Silicone und/oder fluorierte Komponenten als Flammschutzmittel, die aus den oben beschriebenen Gründen für den genannten Anwendungsbereich unvorteilhaft sind.

Die US-A 7303810 beschreibt Polycarbonat/Polyesterplatten bzw. deren Mischungen die flammfest ausgerüstet sind. Die in US-A 7303810 beschriebenen Platten enthalten Phosphor-basierte Flammschutzadditive. Allerdings werden auch in dieser Anmeldung die Brandeigenschaften nach Außenbewitterung nicht untersucht und deshalb auch nicht weiter auf diese eingegangen. Der Fachmann kann also aus den genannten Konzentrationen der eingesetzten Additive nicht erkennen, welche einen ausreichenden Brandschutz nach Außenbewitterung liefern. Die in der US-A 7303810 beschriebenen Polycarbonatplatten weisen jedoch für den Außenanwendungsbereich für Bau und Konstruktion nicht akzeptabel niedrige Vicat-Temperaturen, die ein Maß für die Wärmeformstabilität sind. Dies wird verursacht durch die benötigten hohen Konzentrationen von Flammschutzmitteln, die die Vicat-Temperatur von Polycarbonat drastisch absenken.

Die US-A 6649677 offenbart, dass sich die Flammwidrigkeit von Polycarbonat im unbewitterten Zustand durch eine deutliche Reduktion der Viskosität des Polycarbonats und die Zugabe ganz bestimmter Mengen an Phosphor-Flammschutzmitteln verbessern lässt. Die Reduktion der Viskosität führt jedoch zu einer Erniedrigung der mechanischen Eigenschaften und ist daher nicht immer eine geeignete Methode zur Einstellung der Flammschutzeigenschaften. Zudem wird das in der hier offenbarten Erfindung verwendete Flammschutzmittel der allgemeinen Formel 1 in der US-A 6649677 nicht erwähnt.

Die US-A 2006/0240242 offenbart Platten mit poröser Struktur bestehend aus einem thermoplastischen Polymer enthaltend 20 - 80 % verstärkende Fasern und Flammschutzmitteln. Die Eigenschaften nach Außenbewitterung dieser Platten wurden jedoch nicht optimiert, und weder die Anmeldung im allgemeinen noch die Ausführungsbeispiele im besonderen fokussieren sich auf Polycarbonat oder die hier verwendeten Flammschutzmittel der allgemeinen Formel 1. Für das der vorliegenden Erfindung zugrundeliegende Problem der Verbesserung der Flammwidrigkeit von Polycarbonatplatten nach Bewitterung kann der Anmeldung somit keine Lehre entnommen werden.

WO 2007/064322 A1 beschreibt witterungsstabile, flammfest ausgerüstete Platten für Dachanwendungen. Diese Dachplatten sollen einen speziellen Mehrschichtaufbau, unter anderem enthaltend eine mittlere farbgebende Schicht, aufweisen. Das in der vorliegenden Erfindung benutzte Flammschutz-Additiv wird nicht beschrieben.

WO 2000/077012 A1 beschreibt die Verwendung und Synthese von Bisphenol-A-diphenylphosphaten als Flammschutzmittel. Aus dieser Schrift lässt sich für den Fachmann jedoch nicht entnehmen, welche Zusammensetzungen in Platten für den Bau- und Konstruktionsbereich sinnvoll sind, um auch nach längerer Außenbewitterung gute Flammschutzeigenschaften zu erreichen.

In der WO 2008/125203 A1 werden flammfest ausgerüstete Kunststoffmassen offenbart, die ein spezielles Triazin und 0.01 -30 % eines Flammschutzadditivs enthalten. Das Triazin wird dort mit dem Flammschutzadditiv in einer synergistischen Mischung verwendet, wobei der Einsatz von vielerlei verschiedenen Flammschutzmitteln möglich ist. Der Fachmann kann damit der WO 2008/125203 A1 nicht entnehmen, dass das in der vorliegenden Anmeldung verwendete, erfindungsgemäße Flammschutzadditiv in bestimmten Konzentrationsbereichen bereits ohne die synergistische Zusammenwirkung mit einem UV-Absorber die Polycarbonatplatte effektiv vor einem Verlust an Flammschutzeigenschaft während der Außenbewitterung bewahrt. In der vorliegenden Anmeldeschrift werden die Flammschutzmittel der allgemeinen Formel 1 nicht in einer Mischung mit Triazinen verwendet. Die Flammschutzmittel werden in der Basisschicht der Platte, Triazine können gegebenfalls optional in einer Coex-Schicht verwendet werden.

In US-A 2005/0142371 werden Platten aus Polycarbonat beschrieben, welche optional Flammschutzmittel enthalten können. Dabei werden in dieser Anmeldeschrift eine Vielzahl möglicher Flammschutzmittel, darunter auch Phosphor- und Brom-haltige Flammschutzmittel genannt. Der Fachmann kann dabei nicht erkennen, welche dieser Flammschutzmittel zu verbesserten Flammschutzeigenschaften nach Außenbewitterung führt.

In EP-A 0767204 werden Polycarbonatmischungen enthaltend Phosphor-haltige Flammschutzmittel beschrieben. Es werden keine Platten beschrieben. Es ist der Anmeldeschrift nicht zu entnehmen, wie die oben beschriebenen besonderen Eigenschaften von Extrusionsformkörpern zu erreichen sind.

In WO 2003002643 A1 und DE-A 10160138 sind Polyester enthaltend Phosphor-haltige Flammschutzmittel beschrieben. Auch diese Anmeldungen offenbaren jedoch keine Lösung für Polycarbonatplatten bezüglich verbesserten Flammschutzeigenschaften nach Außenbewitterung.

Der Stand der Technik trägt somit nichts zur Lösung der Aufgabe der vorliegenden Erfindung bei, Platten aus Polycarbonat bereitzustellen, welche verbesserte Flammschutzeigenschaften nach Außenbewitterung aufweisen.

Es wurde nun gefunden, dass Platten, deren Basisschicht Polycarbonat und 0,05 Gew.-% bis 6,00 Gew.-%, bevorzugt 0,10 Gew.-% bis 5,50 Gew.-%, besonders bevorzugt 0,15 Gew.-% bis 5,00 Gew.-%, ganz besonders bevorzugt 0,60 Gew.-% bis 5,00 % sowie in einer speziellen Ausführungsform der Erfindung für Platten mit weiter optimierten maximalen Durchschnittsrauchgastemperaturen im Brandschachttest gemäß DIN 4102-B1 nach einem Jahr Bewitterung 1,50 Gew.-% bis 6,00 Gew.-%, bevorzugt 2,00 Gew.-% bis 5,00 Gew.-% sowie besonders bevorzugt 2,50 Gew.-% bis 5,00 Gew.-% Flammschutzmittel ausgewählt aus einem oligomeren Phosphorsäureester abgeleitet von Bisphenol A oder Hydrochinon oder Resorcin, besonders bevorzugt von Bisphenol A-Derivaten der Formel 1 (Flammschutzmittel 1), enthält, wobei sich die Gew.-%-Angaben auf die Gesamtzusammensetzung der Basischicht beziehen, diese Anforderungen erfüllen. Eingeschlossene Polycarbonate sind sowohl lineares und bzw. oder verzweigtes aromatisches Polycarbonat, bevorzugt lineares Polycarbonat oder Mischungen aus verzweigtem Polycarbonat und linearem Polycarbonat, wobei der lineare Polycarbonatanteil mindestens 40 Gew.-% beträgt. In einer speziellen Ausführungsform der Erfindung ist der Anteil an linearem Polycarbonat größer als 60,00 Gew.-%. Werden Mischungen aus linearem und verzweigtem Polycarbonat eingesetzt, werden bevorzugt Mischungen enthaltend 5,00 Gew.-% - 60,00 Gew.-%, insbesondere bevorzugt 15,00 Gew.-% - 50,00 Gew.-% sowie in einer speziellen Ausführungsform der Erfindung für Platten mit weiter optimierten maximalen Durchschnittsrauchgastemperaturen im Brandschachttest gemäß DIN 4102-B1 nach einem Jahr Bewitterung 15,00 Gew.-% - 45,00 Gew.-%, bevorzugt 15,00 Gew.-% - 40,00 Gew.-% verzweigtes Polycarbonat eingesetzt. Die Gew.-%-Angaben beziehen sich wiederum auf die Gesamtzusammensetzung der Basisschicht.

Durch die vorliegende Erfindung werden Polycarbonat-Platten zur Verfügung gestellt, die auch nach mindestens 1 Jahr Außenbewitterung die Brandschutzklassifizierung B1 erfüllen, die sie anfangs inne hatten. Die Platten weisen ferner gute optische Eigenschaften wie hohe Transmission, sowie hohe Wärmeformstabilität und gute mechanische Eigenschaften auf.

Die in der vorliegenden Erfindungsschrift beschriebenen Platten werden durch eine ausgewählte UV-Absorber-enthaltende Schicht vor Vergilbung geschützt. Dieser UV-Schutz verhindert jedoch nicht die Veränderung der Flammschutzeigenschaften. Deshalb zeigen nur Platten, die den erfindungsgemäßen Aufbau tragen, die beschriebenen vorteilhaften Flammschutzeigenschaften nach Bewitterung.

Im Rahmen der vorliegenden Erfindung wurde nun gefunden, dass bei Polycarbonatplatten, enthaltend erfindungsgemäße Konzentrationen von speziellen Phosphor-haltigen Flammschutzmitteln, die Flammschutzeigenschaften nach Außenbewitterung im Vergleich zum Stand der Technik überraschenderweise deutlich verbessert sind.

Die in der erfindungsgemäßen Zusammensetzung enthaltenden Phosphor-basierten Flammschutzmittel bestehen bevorzugt aus oligomeren Phosphorsäureestern, die sich von folgender Formel (1) ableiten: 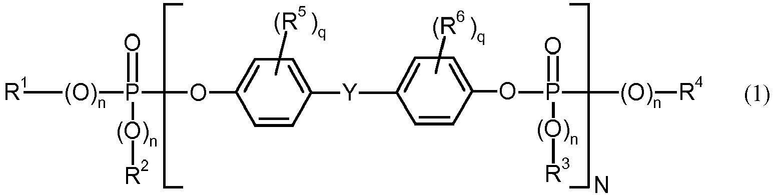 worin
R¹, R², R³ und R⁴, unabhängig voneinander gegebenenfalls durch Halogen substituiertes C₁-C₈-Alkyl, jeweils gegebenenfalls durch Halogen und/oder Alkyl substituiertes C₅-C₆-Cycloalkyl, C₆-C₁₀-Aryl oder C₇-C₁₂-Aralkyl,
n unabhängig voneinander 0 oder 1,
q unabhängig voneinander 0, 1, 2, 3 oder 4,
bedeuten und
N 0, 60 bis 4,00, vorzugsweise 0,90 bis 2,50, insbesondere 1,00 bis 1,15 ist,
R⁵ und R⁶ unabhängig voneinander C₁-C₄-Alkyl, vorzugsweise Methyl oder Halogen, vorzugsweise Chlor und/oder Brom bedeuten,
Y C₁-C₇-Alkyliden, C₁-C₇-Alkylen, C₅-C₁₂-Cycloalkylen, C₅-C₁₂-Cycloalkyliden, -O-, -S-, -SO-, -SO₂-, -CO- oder einen Rest der Formel (2) oder (3) 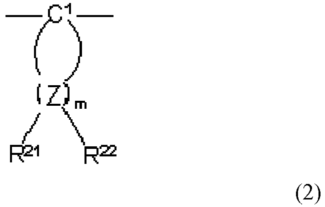 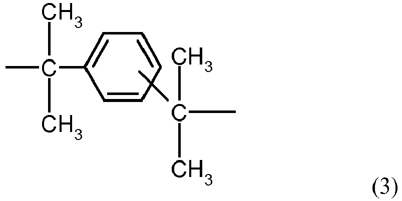 mit
   Z = Kohlenstoff und
   R²¹ und R²² für jedes Z individuell wählbar, unabhängig voneinander Wasserstoff oder C1-C6-Alkyl, vorzugsweise Wasserstoff, Methyl oder Ethyl, und
   m einer ganze Zahl von 4 bis 7, bevorzugt 4 oder 5,
   mit der Maßgabe, dass an mindestens einem Atom Z R²¹ und R²² gleichzeitig Alkyl sind,
   bedeutet.

Die erfindungsgemäß geeigneten Phosphorverbindungen gemäß Flammschutzmittel 1 sind generell bekannt (s. beispielsweise Ullmanns Encyklopädie der Technischen Chemie, Bd. 18, S. 301 ff. 1979; Houben-Weyl, Methoden der Organischen Chemie, Bd. 12/1, S. 43; Beistein, Bd. 6, S. 177). Bevorzugte Substituenten R¹ bis R⁴ umfassen Methyl, Butyl, Octyl, Chlorethyl, 2-Chlorpropyl, 2,3-Dibrompropyl, Phenyl, Kresyl, Cumyl, Naphthyl, Chlorphenyl, Bromphenyl, Pentachlorphenyl und Pentabromphenyl. Besonders bevorzugt sind Methyl, Ethyl, Butyl, Phenyl und Naphthyl.

Die aromatischen Gruppen R¹, R², R³ und R⁴ können mit Halogen und/oder C₁-C₄-Alkyl substituiert sein. Besonders bevorzugte Aryl-Reste sind Kresyl, Phenyl, Xylenyl, Propylphenyl oder Butylphenyl sowie auch die bromierten und chlorierten Derivate davon.

R⁵ und R⁶ bedeuten unabhängig voneinander vorzugsweise Methyl oder Brom.

Y steht vorzugsweise für C₁-C₇-Alkylen, insbesondere für Isopropyliden oder Methylen, ganz besonders bevorzugt für Isopropyliden.

n in der Formel (1) kann unabhängig voneinander 0 oder 1 sein, vorzugsweise ist n gleich 1.

q kann 0, 1, 2, 3 oder 4 sein, vorzugsweise ist q 0, 1 oder 2.

N kann Werte von 0,50 bis 4,00, vorzugsweise 0,90 bis 2,50, insbesondere 1,00 bis 1,15 annehmen. Als erfindungsgemäßes Flammschutzmittel 1 können auch Mischungen verschiedener Phosphate eingesetzt werden. In diesem Fall ist N ein Durchschnittswert. In diesem Gemisch können auch Monophosphorverbindungen (N=0) enthalten sein.

Vorzugsweise ist der Anteil der Monophosphorverbindungen (N=0) im Flammschutzmittel 1 kleiner gleich 5,00 Gew.-%, bevorzugt kleiner gleich 4,00 Gew.-%, besonders bevorzugt kleiner gleich 3,00 Gew.-%.

Die mittleren N-Werte können bestimmt werden in dem mittels geeigneter Methode (Gaschromatographie (GC), High Pressure Liquid Chromatography (HPLC), Gelpermeationschromatographie (GPC)) die Zusammensetzung der Phosphat-Mischung (Molekulargewichtsverteilung) bestimmt wird und daraus die Mittelwerte für N berechnet werden.

Besonders bevorzugt ist im Rahmen der vorliegenden Erfindung Bisphenol-A-diphosphat. Bisphenol-A-diphosphat ist u.a. als Reofos^{®} BAPP (Firma Chemtura, Indianapolis, USA), NcendX^{®} P-30 (Firma Albemarle, Baton Rouge, Louisiana, USA), Fyrolflex^{®} BDP (Firma Akzo Nobel, Arnheim, Niederlande) oder CR 741^{®} (Firma Daihachi, Osaka, Japan) kommerziell erhältlich.

Die Herstellung dieser Flammschutzmittel ist z.B. auch in US-A 2002/0038044 beschrieben.

Die erfindungsgemäßen Platten lassen sich in diversen Anwendungen vorteilhaft einsetzen. Die erfindungsgemäßen Platten eignen sich vor allem für den Einsatz bei Architektur- oder Industrieverscheibungen wie z.B. Wand- und Dachbekleidungen, Lichtkuppeln oder bruchsicheren Verscheibungen, an die jeweils erhöhte Anforderungen an die Flammwidrigkeit nach Bewitterung gestellt werden, eingesetzt werden. Diese Platten lassen sich insbesondere durch Extrusion herstellen. Hierbei kann es sich um massive Platten in einer Dicke von beispielsweise 1 bis 10 mm oder um Hohlkammerplatten oder Hohlprofile mit z.T. besonderer Geometrie handeln. Bevorzugt werden die erfindungsgemäßen Platten im Außenbereich eingesetzt.

Die erfindungsgemäßen Platten erfüllen die B1-Norm im Gegensatz zu Platten mit anderen üblicherweise in Polycarbonat verwendeten Flammschutzmitteln überraschenderweise auch nach längerer Bewitterungsdauer.

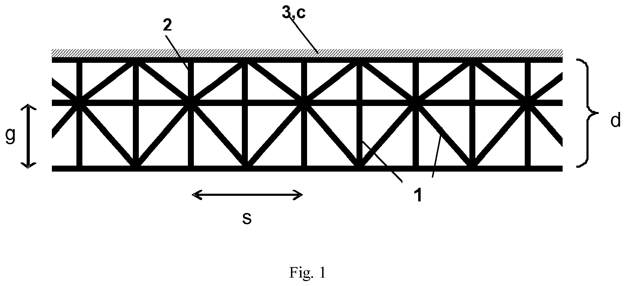

Insbesondere lassen sich mit der erfindungsgemäßen Zusammensetzung Platten mit Flächengewichten von größer oder gleich 2,4 kg/m², größer oder gleich 2,5 kg/m² und bzw. oder größer oder gleich 2,7 kg/m² herstellen. Weitere bevorzugte Flächengewichte der Platten sind größer oder gleich 2,8 kg/m², größer oder gleich 3,1 kg/m² und bzw. oder größer oder gleich 3,4 kg/m². In anderen Ausführungsformen sind bevorzugte Platten solche mit einem Flächengewicht von größer oder gleich 3,5 kg/m² und bzw. oder größer oder gleich 3,7 kg/m² und Platten mit einem Flächengewicht von größer oder gleich 4,2 kg/m². Es kann sich um Massiv- oder Stegmehrfachplatten handeln. Ein Beispiel einer Stegmehrfachplatte (Dreifachplatte mit X-Profil) zusätzlich enthaltend eine Coextrusionsschicht (3) ist in Figur 1 dargestellt. Die Stegplatte besteht aus Stegen (1) und Gurten (2), wobei jeweils der oberste und der unterste Gurt die Außenschichten bilden. Stehen nicht alle Stege parallel zueinander senkrecht zu den Gurten, sondern kreuzen sich an einem inneren Gurt, wird das Profil als X-Profil bezeichnet. Der Abstand zwischen zwei parallelen Stegen an den Außengurten beträgt s, der Abstand der Gurte (2) ist mit g gekennzeichnet. Die Gesamtdicke der Platte von Außengurt zu Außengurt ist mit d gekennzeichnet, die Dicke der Coextrusionsschicht (3) ist mit c gekennzeichnet.

Die Basisschicht der erfindungsgemäßen Platten kann z.B. folgende Geometrien aufweisen:
- 3-fach Stegplatte mit einer Dicke d von 12 bis 20 mm und einem Stegabstand s von 12 bis 20 mm
- 6-fach Stegplatte mit einer Dicke d von 12 bis 22 mm und einem Stegabstand s von 12 bis 22 mm
- 3-fach Stegplatte mit einem X-Profil und einer Dicke d von 12 bis 20 mm wobei die X-Struktur (gebildet von 3 Stegen) eine Breite s von 20 bis 30 mm aufweist.
- 5-fach Stegplatte mit einem X-Profil und einer Dicke von 20 bis 50 mm wobei die X-Struktur (gebildet von 3 Stegen) eine Breite s von 20 bis 30 mm aufweist.
- 5-fach Stegplatte mit einem M-Profil und einer Dicke von 20 bis 50 mm, wobei die Stege einen Abstand von 15 bis 25 mm aufweisen.

Die erfindungsgemäßen Platten bestehen bevorzugt aus der Basisschicht, die einseitig oder zweiseitig mit einer Deckschicht versehen ist.

Polycarbonat für die Basis- und Deckschichten der erfindungsgemäßen Platten sind Homopolycarbonate, Copolycarbonate und thermoplastische Polyestercarbonate. Polycarbonate der erfindungsgemäßen Platten sind Mischungen aus verzweigtem Polycarbonat und linearem Polycarbonat, wobei der lineare Polycarbonatanteil mindestens 40,00 Gew.-% beträgt. In einer speziellen Ausführungsform der Erfindung ist der Anteil an linearem Polycarbonat größer als 60,00 Gew.-%.

Es werden evorzugt Mischungen enthaltend 5,00 Gew.-% - 60,00 Gew.-%, insbesondere bevorzugt 15,00 Gew.-% - 50,00 Gew.-% sowie in einer speziellen Ausführungsform der Erfindung für Platten mit weiter optimierten maximalen Durchschnittsrauchgastemperaturen im Brandschachttest gemäß DIN 4102-B1 nach einem Jahr Bewitterung 15,00 Gew.-% - 45,00 Gew.-%, bevorzugt 15,00 Gew.-% - 40,00 Gew.-% verzweigtes Polycarbonat eingesetzt. Die Gew.-%-Angaben beziehen sich hierbei auf die Gesamtzusammensetzung der jeweiligen Schicht.

Das eingesetzte Polycarbonat bzw. die eingesetzte Polycarbonatmischung weist bevorzugt einen MVR < 11 (bei 300 °C und 1,2 kg nach ISO 1133) und ganz besonders bevorzugt einen MVR < 8 (bei 300 °C und 1,2 kg nach ISO 1133) auf.

Die in den erfindungsgemäßen Platten einzusetzenden linearen bzw. verzweigten Polycarbonate und Copolycarbonate haben im Allgemeinen mittlere Molekulargewichte M̅_{w} (Gewichtsmittel) von 2 000 bis 200 000 g/mol, bevorzugt 3 000 bis 150 000 g/mol, insbesondere 5 000 bis 100 000 g/mol, ganz besonders bevorzugt 8 000 bis 80 000 g/mol, insbesondere 12 000 bis 70 000 g/mol (bestimmt mittels Gelpermeationschromatographie mit Polycarbonat-Eichung).

Sie haben in diesem Rahmen weiterhin bevorzugt mittlere Molekulargewichte mit einem Gewichtsmittel von M̅_{w} von 16.000 bis 40.000 g/mol.

Zur Herstellung von Polycarbonaten für die erfindungsgemäßen Platten sei beispielhaft auf "Schnell", Chemistry and Physics of Polycarbonats, Polymer Reviews, Vol. 9, Interscience Publishers, New York, London, Sydney 1964, auf D.C. PREVORSEK, B.T. DEBONA and Y. KESTEN, Corporate Research Center, Allied Chemical Corporation, Moristown, New Jersey 07960, "Synthesis of Poly(ester)carbonate Copolymers" in Journal of Polymer Science, Polymer Chemistry Edition, Vol. 19, 75-90 (1980), auf D. Freitag, U. Grigo, P.R. Müller, N. Nouvertne, BAYER AG, "Polycarbonates" in Encyclopedia of Polymer Science and Engineering, Vol. 11, Second Edition, 1988, Seiten 648-718 und schließlich auf Dres. U. Grigo, K. Kircher und P.R. Müller "Polycarbonate" in Becker/Braun, Kunststoff-Handbuch, Band 3/1, Polycarbonate, Polyacetale, Polyester, Celluloseester, Carl Hanser Verlag München, Wien 1992, Seiten 117-299 verwiesen. Die Herstellung erfolgt vorzugsweise nach dem Phasengrenzflächenverfahren oder dem Schmelze-Umesterungsverfahren und wird zunächst beispielhaft an dem Phasengrenzflächenverfahren beschrieben.

Als Ausgangsverbindungen bevorzugt einzusetzende Verbindungen sind Bisphenole der allgemeinen Formel HO-Z-OH, worin Z ein divalenter organischer Rest mit 6 bis 30 Kohlenstoffatomen ist, der eine oder mehrere aromatische Gruppen enthält. Beispiele solcher Verbindungen sind Bisphenole, die zu der Gruppe der Dihydroxydiphenyle, Bis(hydroxyphenyl)alkane, Indanbisphenole, Bis(hydroxyphenyl)ether, Bis-(hydroxyphenyl)sulfone, Bis(hydroxyphenyl)ketone und α,α'-Bis(hydroxyphenyl)-diisopropylbenzole gehören.

Besonders bevorzugte Bisphenole, die zu den vorgenannten Verbindungsgruppen gehören, sind Bisphenol-A, Tetraalkylbisphenol-A, 4,4-(meta-Phenylendiisopropyl)diphenol (Bisphenol M), 4,4-(para-Phenylendiisopropyl)diphenol, N-Phenyl-Isatinbisphenol, 1,1-Bis-(4-hydroxyphenyl)-3,3,5-trimethylcyclohexan (BP-TMC), Bisphenole vom Typ der 2-Hydrocarbyl-3,3-bis(4-hydroxyaryl)phthalimidine, insbesondere 2-Phenyl-3,3-bis(4-hydroxyphenyl)phthalimidin, sowie gegebenenfalls deren Gemische. Besonders bevorzugt sind Homopolycarbonate auf Basis Bisphenol-A und Copolycarbonate auf der Basis der Monomere Bisphenol-A und 1,1-Bis-(4-hydroxyphenyl)-3,3,5-trimethylcyclohexan. Die erfindungsgemäß einzusetzenden Bisphenolverbindungen werden mit Kohlensäureverbindungen, insbesondere Phosgen oder beim Schmelzeumesterungsprozess Diphenylcarbonat bzw. Dimethylcarbonat, umgesetzt.

Polyestercarbonate werden durch Umsetzung der bereits genannten Bisphenole, mindestens einer aromatischen Dicarbonsäure und gegebenenfalls Kohlensäureäquivalente erhalten. Geeignete aromatische Dicarbonsäuren sind beispielsweise Phthalsäure, Terephthalsäure, Isophthalsäure, 3,3'-oder 4,4'-Diphenyldicarbonsäure und Benzophenondicarbonsäuren. Ein Teil, bis zu 80 Mol-%, vorzugsweise von 20 bis 50 Mol-% der Carbonatgruppen in den Polycarbonaten können durch aromatische Dicarbonsäureester-Gruppen ersetzt sein.

Beim Phasengrenzflächenverfahren verwendete inerte organische Lösungsmittel sind beispielsweise Dichlormethan, die verschiedenen Dichlorethane und Chlorpropanverbindungen, Tetrachlormethan, Trichlormethan, Chlorbenzol und Chlortoluol. Vorzugsweise werden Chlorbenzol oder Dichlormethan bzw. Gemische aus Dichlormethan und Chlorbenzol eingesetzt.

Die Phasengrenzflächenreaktion kann durch Katalysatoren wie tertiäre Amine, insbesondere N-Alkylpiperidine oder Oniumsalze beschleunigt werden. Bevorzugt werden Tributylamin, Triethylamin und N-Ethylpiperidin verwendet. Im Falle des Schmelzeumesterungsprozesses werden die in DE-A 42 38 123 genannten Katalysatoren verwendet.

Die Polycarbonate können durch den Einsatz geringer Mengen Verzweiger bewusst und kontrolliert verzweigt werden. Einige geeignete Verzweiger sind: Isatinbiskresol, Phloroglucin, 4,6-Dimethyl-2,4,6-tri-(4-hydroxyphenyl)-hepten-2; 4,6-Dimethyl-2,4,6-tri-(4-hydroxyphenyl)-heptan; 1,3,5-Tri-(4-hydroxyphenyl)-benzol; 1,1,1-Tri-(4-hydroxyphenyl)-ethan; Tri-(4-hydroxyphenyl)-phenyl-methan; 2,2-Bis-[4,4-bis-(4-hydroxyphenyl)-cyclohexyl]-propan; 2,4-Bis-(4-hydroxyphenyl-isopropyl)-phenol; 2,6-Bis-(2-hydroxy-5'-methyl-benzyl)-4-methylphenol; 2-(4-Hydroxyphenyl)-2-(2,4-dihydroxyphenyl)-propan; Hexa-(4-(4-hydroxyphenyl-isopropyl)-phenyl)-orthoterephthalsäureester; Tetra-(4-hydroxyphenyl)-methan; Tetra-(4-(4-hydroxyphenyl-isopropyl)-phenoxy)-methan; α,α',α"-Tris-(4-hydroxyphenyl)-1,3,5-triisopropylbenzol; 2,4-Dihydroxybenzoesäure; Trimesinsäure; Cyanurchlorid; 3,3-Bis-(3-methyl-4-hydroxyphenyl)-2-oxo-2,3-dihydroindol; 1,4-Bis-(4',4"-dihydroxytriphenyl)-methyl)-benzol und insbesondere: 1,1,1-Tri-(4-hydroxyphenyl)-ethan und Bis-(3-methyl-4-hydroxyphenyl)-2-oxo-2,3-dihydroindol.

Die gegebenenfalls mitzuverwendenden 0,05 bis 2 Mol-%, bezogen auf eingesetzte Diphenole, an Verzweigern bzw. Mischungen der Verzweigern, können mit den Diphenolen zusammen eingesetzt werden aber auch in einem späteren Stadium der Synthese zugegeben werden.

Es können Kettenabbrecher eingesetzt werden. Als Kettenabbrecher werden bevorzugt Phenole wie Phenol, Alkylphenole wie Kresol und 4-tert.-Butylphenol, Chlorphenol, Bromphenol, Cumylphenol oder deren Mischungen in Mengen von 1-20 Mol-%, bevorzugt 2-10 Mol-%, je Mol Bisphenol verwendet. Bevorzugt sind Phenol, 4-tert.-Butylphenol bzw. Cumylphenol.

Kettenabbrecher und Verzweiger können getrennt oder aber auch zusammen mit dem Bisphenol den Synthesen zugesetzt werden.

Das erfindungsgemäß bevorzugte Polycarbonat ist Bisphenol-A-Homopolycarbonat.

Alternativ können die erfindungsgemäßen Polycarbonate auch nach dem Schmelzumesterungsverfahren hergestellt werden. Das Schmelzumesterungsverfahren ist beispielsweise in der Encyclopedia of Polymer Science, Vol. 10 (1969), Chemistry and Physics of Polycarbonates, Polymer Reviews, H. Schnell, Vol. 9, John Wiley and Sons, Inc. (1964) sowie der DE-C 10 31 512 beschrieben.

Beim Schmelzumesterungsverfahren werden die bereits beim Phasengrenzflächenverfahren beschriebenen aromatischen Dihydroxyverbindungen, mit Kohlensäurediestern unter Zuhilfenahme von geeigneten Katalysatoren und gegebenenfalls weiteren Zusatzstoffen in der Schmelze umgeestert Kohlensäurediester im Sinne der Erfindung sind solche der Formel (4) und (5) 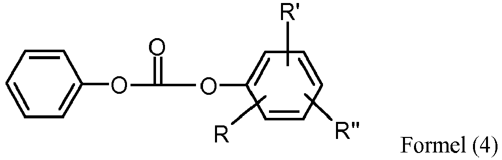 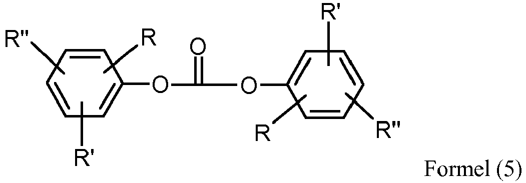 wobei
R, R' und R" unabhängig voneinander H, gegebenenfalls verzweigte C₁-C₃₄-Alkyl/Cycloalkyl, C₇-C₃₄-Alkaryl oder C₆-C₃₄-Aryl darstellen können,
beispielsweise
Diphenylcarbonat, Butylphenyl-phenylcarbonat, Di-Butylphenylcarbonat, Isobutylphenylphenylcarbonat, Di-Isobutylphenylcarbonat, tert-Butylphenyl-phenylcarbonat, Di-tert-Butylphenylcarbonat, n-Pentylphenyl-phenylcarbonat, Di-(n-Pentylphenyl)carbonat, n-Hexylphenylphenylcarbonat, D i-(n-Hexylphenyl)carbonat, Cyclohexylphenyl-phenylcarbonat, Di-Cyclohexylphenylcarbonat, Phenylphenol-phenylcarbonat, Di-Phenylphenolcarbonat, Isooctylphenylphenylcarbonat, Di-Isooctylphenylcarbonat, n-Nonylphenyl-phenylcarbonat, Di-(n-Nonylphenyl)carbonat, Cumylphenyl-phenylcarbonat, Di-Cumylphenylcarbonat, Naphthylphenylphenylcarbonat, Di-Naphthylphenylcarbonat, Di-tert-Butylphenyl-phenylcarbonat, Di-(Di-tert-Butylphenyl)carbonat, Dicumylphenyl-phenylcarbonat, Di-(Dicumylphenyl)carbonat, 4-Phenoxyphenyl-phenylcarbonat, Di-(4-Phenoxyphenyl)carbonat, 3-Pentadecylphenylphenylcarbonat, Di-(3-Pentadecylphenyl)carbonat, Tritylphenyl-phenylcarbonat, Di-Tritylphenylcarbonat, bevorzugt
Diphenylcarbonat, t e r t-Butylphenyl-phenylcarb onat, Di-tert-Butylphenylcarbonat, Phenylphenol-phenylcarbonat, Di-Phenylphenolcarbonat, Cumylphenyl-phenylcarbonat, Di-Cumylphenylcarbonat,
besonders bevorzugt Diphenylcarbonat.

Es können auch Mischungen der genannten Kohlensäurediester eingesetzt werden.

Der Anteil an Kohlensäureester beträgt 100 bis 130 mol-%, bevorzugt 103 bis 120 mol-%, besonders bevorzugt 103 bis 109 mol-%, bezogen auf die Dihydroxyverbindung.

Als Katalysatoren im Sinne der Erfindung werden im Schmelzumesterungsverfahren wie in der genannten Literatur beschriebene basische Katalysatoren wie beispielsweise Alkali- und Erdalkalihydroxide und -oxide aber auch Ammonium- oder Phosphoniumsalze, im Folgenden als Oniumsalze bezeichnet, eingesetzt. Bevorzugt werden dabei Oniumsalze, besonders bevorzugt Phosphoniumsalze eingesetzt. Phosphoniumsalze im Sinne der Erfindung sind solche der Formel (6) 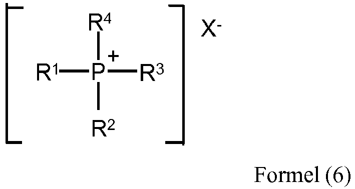 wobei
- R¹⁻⁴: dieselben oder verschiedene C₁-C₁₀-Alkyle, C₆-C₁₀-Aryle, C₇-C₁₀-Aralkyle oder C₅-C₆-Cycloalkyle sein können, bevorzugt Methyl oder C₆-C₁₄-Aryle, besonders bevorzugt Methyl oder Phenyl, und
- X⁻: ein Anion wie Hydroxid, Sulfat, Hydrogensulfat, Hydrogencarbonat, Carbonat, ein Halogenid, bevorzugt Chlorid, oder ein Alkoholat der Formel OR sein kann, wobei R C₆-C₁₄-Aryl oder C₇-C₁₂-Aralkyl, bevorzugt Phenyl, sein kann. Bevorzugte Katalysatoren sind

Tetraphenylphosphoniumchlorid,
Tetraphenylphosphoniumhydroxid,
Tetraphenylphosphoniumphenolat,
besonders bevorzugt Tetraphenylphosphoniumphenolat.

Die Katalysatoren werden bevorzugt in Mengen von 10⁻⁸ bis 10⁻³ mol, bezogen auf ein mol Bisphenol, besonders bevorzugt in Mengen von 10⁻⁷ bis 10⁻⁴ mol, eingesetzt.

Weitere Katalysatoren können allein oder gegebenenfalls zusätzlich zu dem Oniumsalz verwendet werden, um die Geschwindigkeit der Polymerisation zu erhöhen. Dazu gehören Salze von Alkalimetallen und Erdalkalimetallen, wie Hydroxide, Alkoxide und Aryloxide von Lithium, Natrium und Kalium, vorzugsweise Hydroxid-, Alkoxid- oder Aryloxidsalze von Natrium. Am meisten bevorzugt sind Natriumhydroxid- und Natriumphenolat. Die Mengen des Cokatalysators können im Bereich von 1 bis 200 ppb, vorzugsweise 5 bis 150 ppb und am meisten bevorzugt 10 bis 125 ppb liegen, jeweils berechnet als Natrium.

Die Umesterungsreaktion der aromatischen Dihydroxyverbindung und des Kohlensäurediester in der Schmelze wird bevorzugt in zwei Stufen durchgeführt. In der ersten Stufe findet das Aufschmelzen der aromatischen Dihydroxyverbindung und des Kohlensäurediester bei Temperaturen von 80 bis 250°C, bevorzugt 100 bis 230°C, besonders bevorzugt 120 bis 190°C unter normalem Druck in 0 bis 5 Stunden, bevorzugt 0,25 bis 3 Stunden statt. Nach Zugabe des Katalysators wird durch Anlegen von Vakuum (bis zu 2 mm Hg) und Erhöhung der Temperatur (auf bis zu 260°C) durch Abdestillieren des Monophenols das Oligocarbonat aus der aromatischen Dihydroxyverbindung und dem Kohlensäurediester hergestellt. Hierbei fällt die Hauptmenge an Brüden aus dem Prozess an. Das so hergestellte Oligocarbonat hat eine mittlere Gewichtsmolmasse M_{w} (ermittelt durch Messung der rel. Lösungsviskosität in Dichlormethan oder in Mischungen gleicher Gewichtsmengen Phenol/o-Dichlorbenzol geeicht durch Lichtstreuung) im Bereich von 2000 g/mol bis 18 000 g/mol bevorzugt von 4 000 g/mol bis 15 000 g/mol.

In der zweiten Stufe wird bei der Polykondensation durch weiteres Erhöhen der Temperatur auf 250 bis 320°C, bevorzugt 270 bis 295°C und einem Druck von <2 mm Hg das Polycarbonat hergestellt. Hierbei wird der Rest an Brüden aus dem Prozess entfernt.

Die Katalysatoren können auch in Kombination (zwei oder mehrere) miteinander eingesetzt werden.

Beim Einsatz von Alkali-/Erdalkalimetallkatalysatoren kann es vorteilhaft sein, die Alkali-/ Erdalkalimetallkatalysatoren zu einem späteren Zeitpunkt (z. B. nach der Oligocarbonatsynthese bei der Polykondensation in der zweiten Stufe) zuzusetzen.

Die Reaktion der aromatischen Dihydroxyverbindung und des Kohlensäurediester zum Polycarbonat kann im Sinne des erfindungsgemäßen Verfahrens diskontinuierlich oder bevorzugt kontinuierlich durchgeführt werden, beispielsweise in Rührkesseln, Dünnschichtverdampfern, Fallfilmverdampfern, Rührkesselkaskaden, Extrudern, Knetern, einfachen Scheibenreaktoren und Hochviskosscheibenreaktoren.

Analog des Phasengrenzflächenverfahrens können durch Einsatz mehrfunktioneller Verbindungen verzweigte Poly- oder Copolycarbonate hergestellt werden.

Die erfindungsgemäßen Platten können aus Polycarbonaten, Copolycarbonaten und thermoplastischen Polyestercarbonaten bestehen, denen noch andere Kunststoffe wie Polyamide, Polyimide, Polyesteramide, Polyacrylate und Polymethacrylate wie zum Beispiel Polyalkyl(meth)acrylate und hier insbesondere Polymethylmethacrylat, Polyacetale, Polyurethane, Polyolefine, halogenhaltige Polymere, Polysulfone, Polyethersulfone, Polyetherketone, Polysiloxane, Polybenzimidazole, Harnstoff-Formaldehyd-Harze, Melamin-Formaldehydharze, Phenol-Formaldehyd-Harze, Alkydharze, Epoxidharze, Polystyrole, Copolymere des Styrols oder des alpha-Methylstyrols mit Dienen oder Acrylderivaten, Pfropfpolymerisate auf Basis Acrylnitril/-Butadien/-Styrol oder auf Acrylatkautschuk basierende Pfropfcopolymerisate (s. beispielsweise die in EP-A 640 655 beschriebenen Pfropfpolymerisate) beziehungsweise Siliconkautschuke in bekannter Weise zugemischt sind, beispielsweise durch Compoundierung. Bevorzugt werden Platten aus den oben beschriebenen Polycarbonaten ohne weiteren Polymerblendpartner eingesetzt.

Den erfindungsgemäßen Polycarbonaten sowie den ggf. weiteren enthaltenen Kunststoffen können noch die für diese Thermoplasten üblichen Additive wie Füllstoffe, UV-Stabilisatoren, Thermostabilisatoren, Antistatika und Pigmente in den üblichen Mengen zugesetzt werden; gegebenenfalls können das Entformungsverhalten, das Fließverhalten, und/oder die Flammwidrigkeit noch durch Zusatz externer Entformungsmittel, Fließmittel, und/oder Flammschutzmittel verbessert werden (z. B. Alkyl- und Arylphosphite, -phosphate, -phosphane, niedermolekulare Carbonsäureester, Halogenverbindungen, Salze, Kreide, Quarzmehl, Glas- und Kohlenstofffasern, Pigmente und deren Kombination). Solche Verbindungen werden z. B. in WO 99/55772 A, S. 15 - 25, EP 1 308 084 und in den entsprechenden Kapiteln des "Plastics Additives Handbook" , ed. Hans Zweifel, 5th Edition 2000, Hanser Publishers, Munich beschrieben.

Wie oben beschrieben, ist es aus Kostengründen nicht vorteilhaft zusätzlich andere Flammschutzmittel einzusetzen. Die Polycarbonatzusammensetzungen der erfindungsgemäßen Platten können jedoch auch noch weitere Flammschutzmittel enthalten, die beispielhaft im folgenden aufgeführt sind:
Flammschutzmittel sind unter anderem Alkali- bzw. Erdalkalisalze von aliphatischen bzw. aromatischen Sulfonsaeure- Sulfonamid- und Sulfonimidderivaten z.B. Natrium- oder Kaliumperfluorbutansulfat, Natrium- oder Kaliumperfluoroctansulfat, Natrium- oder Kaliumdiphenylsulfon-sulfonat und Natrium oder Kalium-2,4,6-trichlorbenzoat und N-(p-tolylsulfonyl-)-p-toluolsulfimid-Kaliumsalz, N-(N'-Benzylaminocabonyl)-sulfanylimid-Kaliumsalz. Kaliumperfluorbutansulfonat ist u.a. als Bayowet^{®}C4 (Firma Lanxess, Leverkusen, Deutschland), RM64 (Firma Miteni, Italien) oder als 3M™ Perfluorobutanesulfonyl Fluoride FC-51 (Firma 3M, USA) kommerziell erhältlich.

Halogenhaltige Flammschutzmittel für den Einsatz in Polycarbonatplatten sind z.B. bromierte Verbindungen wie bromierte Oligocarbonate sind z.B. Tetrabrombisphenol-A oligocarbonat BC-52^{®}, BC-58^{®}, BC-52HP^{®} der Firma Chemtura. Desweiteren sind Polypentabrombenzylacrylate (z.B. FR 1025 der Firma Dead Sea Bromine (DSB)), oligomere Umsetzungsprodukte aus Tetrabrom-bisphenol-A mit Expoxiden (z.B. FR 2300 und 2400 der Firma DSB), oder bromierte Oligo- bzw. Polystyrole (z.B. Pyro-Chek^{®} 68PB der Firma Ferro Corporation, PDBS 80 und Firemaster^{®} PBS-64HW der Firma Chemtura) zu nennen.

Als Antitropfmittel kann den Formmassen zusätzlich Polytetrafluorethylen (PTFE) zugefügt werden. Letzteres ist in diversen Produktqualitäten kommerziell verfügbar. Hierzu zählen Additive wie Hostaflon^{®} TF2021 oder aber PTFE-Blends wie Metablen^{®} A-3800. Diese Antitropfmittel führen jedoch zu Eintrübungen.

Bevorzugt enthalten die erfindungsgemäßen Zusammensetzungen jedoch keine Antitropfmittel sowie als Flammschutzmittel ausschließlich Phosphorverbindungen der allgemeinen Formel (1) (Flammschutzmittel 1).

Wie oben beschrieben, sollen die flammfest ausgerüstete Platten gegen UV-Licht geschützt sein. Hierzu können eine oder mehrere Deckschichten, z.B. Lackschichten bzw. Coextrusionsschichten, welche UV-Absorber enthalten, beitragen.

Die Platten im Sinne der vorliegenden Erfindung enthalten bevorzugt eine Deckschicht enthaltend UV-Absorber. Ferner kann die Basisschicht ebenfalls UV-Absorber enthalten. Die Deckschichten können ein- oder beidseitig aufgetragen sein.

Das Verfahren zum Aufbringen zusätzlicher Schichten z. B. aus Polycarbonat, auf einer oder beiden Flächen der Ober- oder Untergurte ist hinlänglich bekannt (s. z.B. EP-A 368094, EP-A 372213, EP-A 0548822). Die Überzugsschicht können dabei z.B. UV-Absorber oder Perlglanzpigmente enthalten und auf dem Wege der Coextrusion oder durch Lackieren oder durch Reverse-Roll-Coating aufgebracht werden.

Die Deckschicht enthält bevorzugt einen oder mehrere UV-Absorber ausgewählt aus der Gruppe enthaltend die folgenden Substanzen: Triazine, Benztriazole, Cyanacrylate und Bismalonate.

Die Deckschicht enthält ganz besonders bevorzugt einen oder mehrere UV-Absorber ausgewählt aus folgenden Substanzen: 2-[2-Hydroxy-4-(2-ethylhexyl)oxy]phenyl-4,6-di(4-phenyl)phenyl-1,3,5-triazin (CAS No. 204583-39-1); 2-(2H-benzotriazol-2-yl)-4-(1,1-dimethylethyl)-6-(1-methylpropyl)-phenol (CAS No. 36437-37-3), welches unter dem Namen Tinuvin^{®} 350 bei der Fa. Ciba kommerziell erhältlich ist; 2,2'-methylenebis[6-(2H-benzotriazol-2-yl)-4-(1,1,3,3-tetramethylbutyl)-phenol (CAS No. 103597-45-1), welches unter dem Namen Tinuvin^{®} 360 bei der Fa. Ciba oder dem Namen ADK Stab LA31^{®} bei der Firma Adeka-Palmarole kommerziell erhältlich ist; 2-(4,6-diphenyl-1,3,5-triazin-2-yl)-5-(hexyloxy)-phenol (CAS No. 147315-50-2), welches unter dem Namen Tinuvin^{®} 1577 bei der Fa. Ciba kommerziell erhältlich ist; 2-[4,6-bis(2,4-dimethylphenyl)-1,3,5-triazin-2-yl]-5-(octyloxy)-phenol (CAS No. 2725-22-6), welches unter dem Namen Cyasorb^{®} UV-1164 bei der Cytec Industries Inc. kommerziell erhältlich ist; Ethyl-2-cyano-3,3-diphenylacrylat (CAS No. 5232-99-5), welches unter dem Namen Uvinul^{®} 3035 bei der BASF AG kommerziell erhältlich ist; 2-Ethylhexyl-2-cyano-3,3-diphenylacrylat (CAS No. 6197-30-4), welches unter dem Namen Uvinul^{®} 3039 bei der BASF AG kommerziell erhältlich ist; 1,3-bis-[(2'-cyano-3',3'-diphenylacryloyl)oxy]-2,2-bis-{[(2'-cyano-3',3'-diphenylacryloyl)oxy]-methyl}-propan (CAS No. 178671-58-4), welches unter dem Namen Uvinul^{®} 3030 bei der BASF AG kommerziell erhältlich ist; Tetra-ethyl-2,2'-(1,4-phenylen-dimethyliden)-bismalonat (CAS No. 6337-43-5), welches unter dem Namen Hostavin^{®} B-CAP™ XP3030 bei der Clariant GmbH kommerziell erhältlich ist.

Die Basisschicht der erfindungsgemäßen Platten enthält entweder keinen UV-Absorber oder einen oder mehrere UV-Absorber ausgewählt aus folgenden Substanzklassen: Benztriazole, Cyanacrylate, Bismalonate.

Bevorzugt enthält die Basisschicht der erfindungsgemäßen einen oder mehrere UV-Absorber, besonders bevorzugt ausgewählt aus folgenden Substanzen: 2-(2H-benzotriazol-2-yl)-4-(1,1,3,3-tetramethylbutyl)-phenol (CAS No. 3147-75-9), welches unter dem Namen Tinuvin® 329 bei der Fa. Ciba oder unter dem Namen Uvinul^{®} 3029 bei der BASF AG oder unter dem Namen Cyasorb^{®} UV-5411 bei der Cytec Industries Inc. kommerziell erhältlich ist; 2-(2H-benzotriazol-2-yl)-4,6-bis(1-methyl-1-phenylethyl)-phenol (CAS No. 70321-86-7), welches unter dem Namen Tinuvin 234^{®} bei der Fa. Ciba kommerziell erhältlich ist; 2-(5-chloro-2H-benzotriazol-2-yl)-6-(1,1-dimethylethyl)-4-methyl)-phenol (CAS No. 3896-11-5), welches unter dem Namen Tinuvin^{®} 326 bei der Fa. Ciba oder unter dem Namen Uvinul^{®}3026 bei der BASF AG kommerziell erhältlich ist; 2,2'-methylenebis[6-(2H-benzotriazol-2-yl)-4-(1,1,3,3-tetramethylbutyl)-phenol (CAS No. 103597-45-1), welches unter dem Namen Tinuvin^{®} 360 bei der Fa. Ciba oder dem Namen ADK Stab LA31^{®} bei der Firma Adeka-Palmarole kommerziell erhältlich ist; Ethyl-2-cyano-3,3-diphenylacrylat (CAS No. 5232-99-5), welches unter dem Namen Uvinul^{®} 3035 bei der BASF AG kommerziell erhältlich ist; 2-Ethylhexyl-2-cyano-3,3-diphenylacrylat (CAS No. 6197-30-4), welches unter dem Namen Uvinul^{®} 3039 bei der BASF AG kommerziell erhältlich ist; 1,3-bis-[(2'-cyano-3',3'-diphenylacryloyl)oxy]-2,2-bis-{[(2'-cyano-3',3'-diphenylacryloyl)oxy]methyl}-propan (CAS No. 178671-58-4), welches unter dem Namen Uvinul^{®} 3030 bei der BASF AG kommerziell erhältlich ist; Tetra-ethyl-2,2'-(1,4-phenylen-dimethyliden)-bismalonat (CAS No. 6337-43-5), welches unter dem Namen Hostavin^{®} B-CAP™ XP3030 bei der Clariant GmbH kommerziell erhältlich ist.

Der Gewichtsanteil des UV-Absorbers in der Deckschicht beträgt 0,50 Gew.-% - 11,00 Gew.-%, bevorzugt 1,00 Gew.-% - 3,00 Gew.-% sowie in einer speziellen Ausführungsform 4,00 Gew.-%-8,00 Gew.-%, bezogen auf die Gesamtzusammensetzung der Deckschicht. Im Fall von UV-Absorber Mischungen bezieht sich die Gewichtsangabe auf die Summe aller eingesetzten UV-Absorber. Soweit ein UV-Absorber in der Basisschicht eingesetzt wird, beträgt der Gewichtsanteil 0,01 Gew.-% - 1,00 Gew.-%, bevorzugt 0,10 Gew.-% - 0,50 Gew.-%, wiederum bezogen auf die Gesamtzusammensetzung der Deckschicht.

Die Einarbeitung der Zuschlagsstoffe in die Zusammensetzung enthaltend Polycarbonat erfolgt mit gängigen Einarbeitungsverfahren und kann beispielsweise durch Vermischen von Lösungen des Zuschlagstoffe und Lösung von Polycarbonat in geeigneten Lösungsmitteln wie Dichlormethan, Halogenalkanen, Halogenaromaten, Chlorbenzol und Xylolen erfolgen. Die Substanzgemische werden dann bevorzugt in bekannter Weise durch Extrusion homogenisiert. Die Lösungsgemische werden bevorzugt in bekannter Weise durch Ausdampfen des Lösungsmittels und anschließender Extrusion aufgearbeitet.

Zudem kann die Zusammensetzung in üblichen Mischvorrichtungen wie Schneckenextrudern (zum Beispiel Zweischneckenextruder, ZSK), Kneter, Brabender- oder Banbury-Mühlen gemischt und anschließend extrudiert werden. Nach der Extrusion kann das Extrudat abgekühlt und zerkleinert werden. Es können auch einzelne Komponenten vorgemischt werden und dann die restlichen Ausgangsstoffe einzeln und/oder ebenfalls gemischt hinzugegeben werden.

Die Additive, insbesondere Flammschutzadditive und/oder UV-Absorber, können auch über Konzentrate (Masterbatche) den Ausgangsmaterialien für die Platten zugegeben werden. Dabei werden durch eines der oben beschriebenen Einarbeitungsverfahren das oder die Additive in möglichst hoher Konzentration in das Polycarbonat eingearbeitet. Das Additiv-Konzentrat wird dann dem Polycarbonatgranulat zur Plattenherstellung zugemischt, so dass sich die gewünschte Endkonzentration des Additivs ergibt.

Die Platten aus Basis- und optionaler Deckschicht / optionalen Deckschichten werden bevorzugt durch (Co)extrusion hergestellt.

Zur Extrusion wird das gegebenenfalls z.B. mittels Trocknung vorbehandelte thermoplastische Granulat dem Extruder zugeführt und im Plastifizierungssystem des Extruders aufgeschmolzen. Die Kunststoffschmelze wird dann durch eine Breitschlitzdüse oder eine Stegplattendüse gedrückt und dabei verformt, im Walzenspalt eines Glättkalanders in die gewünschte endgültige Form gebracht und durch wechselseitige Kühlung auf Glättwalzen und der Umgebungsluft formfixiert. Es werden die zur Extrusion des Polycarbonats notwendigen Temperaturen eingestellt, wobei üblicherweise den Herstellerangaben gefolgt werden kann. Die zur Extrusion verwendeten Polycarbonate mit hoher Schmelzeviskosität werden z.B. normalerweise bei Schmelzetemperaturen von 260 bis 320 °C verarbeitet, entsprechend werden die Zylindertemperaturen des Plastifizierzylinders sowie die Düsentemperaturen eingestellt.

Durch Einsatz von einem oder mehreren Seitenextrudern und einer Mehrkanal-Düse oder gegebenenfalls geeigneten Schmelzeadaptern vor einer Breitschlitzdüse lassen sich thermoplastische Schmelzen verschiedener Zusammensetzung übereinander legen und somit mehrschichtige Platten oder Folien erzeugen (für die Coextrusion siehe beispielsweise EP-A 0 110 221, EP-A 0 110 238 und EP-A 0 716 919, für Details des Adapter- und Düsenverfahrens siehe Johannaber/Ast:"Kunststoff Maschinenführer", Hanser Verlag, 2000 und in Gesellschaft Kunststofftechnik: "Coextrudierte Folien und Platten: Zukunftsperspektiven, Anforderungen, Anlagen und Herstellung, Qualitätssicherung", VDI-Verlag, 1990).

Die erfindungsgemäßen Platten können auch weitere funktionale oder dekorative Schichten, beispielsweise hergestellt durch Coextrusion oder Beschichtungsverfahren, enthalten. Anwendungen der Erzeugnisse finden sich in den Bereichen Architekturverscheibung, insbesondere Bedachungen und Verglasungen von Schwimmbädern, Carports, Gewächshäusern, Industriekomplexen und privaten Gebäuden, sowie Lärmschutz- und Sichtschutzwände.

### Beispiele

### Verwendete Polycarbonate und Additive

### Basisschicht:

### • Komponente A

Makrolon^{®} 3103 550115 MAS 157, ein lineares Bisphenol-A Polycarbonat enthaltend UV-Absorber mit einer Schmelzvolumenrate (MVR) von 6 cm³/10 min (bei 300°C und 1,2 kg nach ISO 1133) der Firma Bayer MaterialScience AG

### • Komponente B

Makrolon^{®} 1243 550111 MAS157, ein verzweigtes Bisphenol-A Polycarbonat enthaltend UV-Absorber mit einer Schmelzvolumenrate (MVR) von 6 cm³/10 min (bei 300°C und 1,2 kg nach ISO 1133) der Firma Bayer MaterialScience AG

### • Flammschutzadditive

BDP: Bisphenol-A-diphosphat der Firma Chemtura (Indianapolis, USA) mit dem Handelsnamen Reofos^{®} BAPP
TBBOC: Tetrabrombisphenol-A oligocarbonat BC-52^{®} der Firma Chemtura

### Deckschicht:

Makrolon^{®} ET UV510 der Firma Bayer MaterialScience AG (lineares Polycarbonat enthaltend einen UV-Absorber auf Triazinbasis)

### Herstellung von Polycarbonat-Flammschutzadditiv-Konzentraten

Die Einrichtung zur Compoundierung der Konzentrate enthaltend 15% BDP bzw. 30% TBBOC besteht aus:
- Dosiereinrichtung für die Komponenten
- einem gleichlaufenden Zweiwellenkneter (Clextral EV 32 HT 2Wellenextruder mit 9 Gehäusen)
- einer Lochdüse zur Ausformung von Schmelzesträngen
- einem Wasserbad zur Abkühlung und dem Verfestigen der Stränge
- einem Granulator.

Bei der Herstellung der Konzentrate enthaltend 15,00 Gew.-% BDP bzw. 30,00 Gew.-% TBBOC wurde s o vorgegangen, dass zu der Polycarbonat-Komponente A das entsprechende Flammschutzmittel zudosiert wird. Die Gehäusetemperaturen im dabei verwendeten oben genannten Compoundierungs-Extruder betrugen in Zone 1 40 °C, in der Zone 2 150 °C und in den folgenden Zonen jeweils zwischen 280 und 300 °C. Der Durchsatz lag zwischen 50 und 75 kg / h. Die Schmelzetemperatur betrug zwischen 310° und 340°C.

### Beispiele 1 - 10: Herstellung der Polycarbonat-Stegdreifachplatten

Die coextrudierten Polycarbonatstegplatten wurden mit Hilfe folgender Maschinen und Apparate hergestellt:
- einem Einschneckenextruder (Entgasungsextruder, Schneckendurchmesser 70 mm und einer Einschnecke der Länge 33 D, Einschnecke, Fa. Reifenhäuser, Troisdorf /Germany)

Der Extruder ist mit einer Vakuum-Schmelzeentgasung ausgerüstet.
- einem 2-Schicht Coextrusionsadapter (Festadapter der Fa. Bexsol, Italy)
- einem 3-Zonen-Coextruder (Schneckendurchmesser 30 mm, Einschnecke der Länge 25 D, Fa. Omipa, Italy)
- einer Stegplattendüse der Breite 500 mm, für Stegplattendicken von 8 bis 45 mm der Fa. Bexsol, Italy
- einem zweiteiligen Vakuumkalibrator, Breite 500 mm, Länge 2x950 mm, Fa. Breyer, Singen/Germany
- der Rollenbahn Rollenbahnlänge (Abstand Kalibrator / Ablängung) 3,5 m
- der Abzugseinrichtung
- der Quertrenneinrichtung (Messer)
- dem Ablagetisch.

Die einseitig mit einer Coextrusionsschicht versehene Stegplatte wurde wie folgt hergestellt: Über Dosierwagen wurde während der Extrusion kontinuierlich eine Trockenmischung aus den Komponenten A, B und dem Flammschutzkonzentrat (entweder BPD oder TBBOC) erzeugt, die als Material der Basisschicht für die Plattenherstellung dient. Dieses Polycarbonat-Granulat des Basismaterials wurde dem Fülltrichter des Hauptextruders zugeführt. Die Flammschutzkonzentrate wurden über die Dosierwaage so dosiert, dass die in den Beispielen 1-10 genannten Endkonzentrationen an Flammschutzmittel in der Platte resultieren (siehe auch Spalte 2 in Tabelle 1). Die Granulatmischung wurde im Hauptextruder bestehend aus Zylinder/Schnecke aufgeschmolzen und gefördert. Die Temperaturen der einzelnen Gehäuse des Hauptextruders lagen bei 240° bis 260°C, die resultierende Massetemperatur bei 250 - 255 °C. Die Wellendrehzahl lag bei 67 U/min. Das in allen Beispielen 1-10 verwendete Coextrusionsmaterial Makrolon ET UV510 der Firma Bayer MaterialScience AG für die einseitige Deckschicht der Platte wurde dem Fülltrichter des Coextruders zugeführt. Die Gehäusetemperaturen des Coextruders lagen bei 265 °C, die Massetemperatur bei ca. 263 °C. Die Wellendrehzahl betrug12 U / min.

Beide Materialschmelzen wurden im Coexadapter zusammengeführt und anschließend in der Düse zu einer Stegdreifachplatte mit einem 3X-Profil und einer Dicke von 25 mm geformt. Die Dicke c der Coexschicht beträgt 50 µm. Die Abzugsgeschwindigkeit lag bei 1,1 m/min. Die weiteren Einrichtungen der Anlagen dienten zum Transport, Ablängen und Ablegen der coextrudierten Platten.

Stegplattengeometrie:
Die Messung an den nach oben beschriebenen Bedingungen erhaltenen Platten ergab eine Dicke d = 25 mm sowie einen Abstand zwischen den parallelen Stegen (s) von 25 mm. Alle Platten weisen ein Flächengewicht von etwa 3,5 kg / m² auf.
Die nachfolgenden Beispiele beschreiben Platten im oben geschilderten Profil enthaltend die eine Coextrusionsschicht aus Makrolon^{®} ET UV 510. Im Folgenden werden nur die Rezepturen der Basisschicht angegeben.
Die folgenden %-Angaben beziehen sich auf Gewichtsprozent (Gew.-%).

### Beispiel 1 (Vergleich):

Stegdreifachplatte, hergestellt wie oben angegeben,

Basisschicht bestehend aus 50,00 Gew.-% Komponente A und 50,00 Gew.-% Komponente B, es wird kein Flammschutzmittel eingesetzt; Coextrusionsschicht bestehend aus Makrolon^{®} ET UV 510.

### Beispiel 2 (Vergleich):

Stegdreifachplatte, hergestellt wie oben angegeben, Basisschicht bestehend aus einer Mischung von 49,50 Gew.-% Komponente A und 49,50 Gew.-% Komponente B mit 1,00 Gew.-% eines Masterbatches aus Polycarbonat der Komponente A enthaltend 30,00 Gew.-% TBBOC. Der Gesamtanteil an TBBOC in dieser Mischung beträgt somit 0,30 Gew.-%; Coextrusionsschicht bestehend aus Makrolon^{®} ET UV 510.

### Beispiel 3 (Vergleich):

Stegdreifachplatte, hergestellt wie oben angegeben, Basisschicht bestehend aus einer Mischung von 47,50 Gew.-% Komponente A und 47,50 Gew.-% Komponente B mit 5,00 Gew.-% eines Masterbatches aus Polycarbonat der Komponente A enthaltend 30,00 Gew.-% TBBOC. Der Gesamtanteil an TBBOC in dieser Mischung beträgt somit 1,50 Gew.-%; Coextrusionsschicht bestehend aus Makrolon^{®} ET UV 510.

### Beispiel 4 (Vergleich):

Stegdreifachplatte, hergestellt wie oben angegeben, Basisschicht bestehend aus einer Mischung von 45,00 Gew.-% Komponente A und 45,00 Gew.-% Komponente B mit 10,00 Gew.-% eines Masterbatches aus Polycarbonat der Komponente A enthaltend 30,00 Gew.-% TBBOC. Der Gesamtanteil an TBBOC in dieser Mischung beträgt 3,00 Gew.-%; Coextrusionsschicht bestehend aus Makrolon^{®} ET UV 510.

### Beispiel 5 (Vergleich):

Stegdreifachplatte, hergestellt wie oben angegeben, Basisschicht bestehend aus einer Mischung von 40,00 Gew.-% Komponente A und 40,00 Gew.-% Komponente B mit 20,00 Gew.-% eines Masterbatches aus Polycarbonat der Komponente A enthaltend 30,00 Gew.-% TBBOC. Der Gesamtanteil an TBBOC in dieser Mischung beträgt 6 %; Coextrusionsschicht bestehend aus Makrolo^{®} ET UV 510.

### Beispiel 6 (Erfindungsgemäß):

Stegdreifachplatte, hergestellt wie oben angegeben, Basisschicht bestehend aus einer Mischung von 49,50 Gew.-% Komponente A und 49,50 Gew.-% Komponente B mit 1,00 Gew% eines Masterbatches aus Polycarbonat der Komponente A enthaltend 15,00 Gew.-% BDP. Der Gesamtanteil an BDP in dieser Mischung beträgt 0,15 Gew.-%; Coextrusionsschicht bestehend aus Makrolo^{®} ET UV 510.

### Beispiel 7 (Erfindungsgemäß):

Stegdreifachplatte, hergestellt wie oben angegeben, Basisschicht bestehend aus einer Mischung von 47,50 Gew.-% Komponente A und 47,50 Gew.-% Komponente B mit 5,00 Gew.-% eines Masterbatches aus Polycarbonat der Komponente A enthaltend 15,00 Gew.-% BDP. Der Gesamtanteil an BDP in dieser Mischung beträgt 0,75 Gew.-%; Coextrusionsschicht bestehend aus Makrol^{®}J ET UV 510.

### Beispiel 8 (Erfindungsgemäß):

Stegdreifachplatte, hergestellt wie oben angegeben, Basisschicht bestehend aus einer Mischung von 45,00 Gew % Komponente A und 45,00 Gew.-% Komponente B mit 10,00 Gew.-% eines Masterbatches aus Polycarbonat der Komponente A enthaltend 15,00 Gew.-% BDP. Der Gesamtanteil an BDP in dieser Mischung beträgt 1,50 Gew.-%; Coextrusionsschicht bestehend aus Makrolo^{®} ET UV 510.

### Beispiel 9 (Erfindungsgemäß):

Stegdreifachplatte, hergestellt wie oben angegeben, Basisschicht bestehend aus einer Mischung von 40,00 Gew.-% Komponente A und 40,00 Gew.-% Komponente B mit 20,00 Gew.-% eines Masterbatches aus Polycarbonat der Komponente A enthaltend 15,00 Gew.-% BDP. Der Gesamtanteil an BDP in dieser Mischung beträgt 3,00 Gew.-%; Coextrusionsschicht bestehend aus Makrolo^{®} ET UV 510.

### Beispiel 10 (Vergleichsbeispiel):

Stegdreifachplatte, hergestellt wie oben angegeben, Basisschicht bestehend aus einer Mischung von 25,00 Gew.-% Komponente A und 25,00 Gew.-% Komponente B mit 50,00 Gew.-% eines Masterbatches aus Polycarbonat der Komponente A enthaltend 15,00 Gew.-% BDP. Der Gesamtanteil an BDP in dieser Mischung beträgt 7,50 Gew.-%; Coextrusionsschicht bestehend aus Makrolo^{®} ET UV 510.

### Ausprüfungen

### a) Außenbewitterung

Die Polycarbonatplatten wurden einer Außenbewitterung unterworfen. Die Bewitterung erfolgte durch die Firma Atlas Material Testing Technology GmbH. Der Bewitterungsort war Hoek van Holland (Niederlande). Die Platten wurden dabei in 45° Grad Winkel nach Süden ausgerichtet. Es fand eine direkte Bewitterung, d.h. ohne weitere davor befindliche Scheibe statt. Die Proben wurden nicht mit einer Schwarztafel oder Spiegel hinterlegt.

Vor dem Brandtest wurden die Platten für mindestens 48h bei 23°C und 50% Luftfeuchtigkeit konditioniert.

Die Bewitterungsdauer betrug 1 Jahr (September 2007 bis September 2008).

### b) Rheologische Eigenschaften

Die Bestimmung des Schmelzeindex (MFR, MVR) erfolgte in Anlehnung an ISO 1133 bzw. gemäß ASTM D1238 MVR.

### c) Flammschutzprüfungen

Die Brandschachtprüfung nach DIN 4102 sieht folgende Bedingungen vor: 4 Proben der Abmessungen 19 cm x 100 cm x Originaldicke werden senkrecht und zueinander rechtwinklig angeordnet.

Nach 10-minütiger Beflammung mit einem Ringbrenner wird der Brenner abgeschaltet. Der Brandschachttest gilt als bestanden, wenn - der Mittelwert der unzerstörten Restlängen mindestens 150 mm beträgt und keine Probe vollständig verbrennt (Restlänge 0 mm), - die mittlere Rauchgastemperatur 200°C nicht überschreitet.

Vor der Prüfung werden die Formteile in Normklima gelagert, bis sie Gewichtskonstant sind.

Alle Brandprüfungen wurden im zertifizierten Brandhaus der Currenta GmbH & Co. OHG, Leverkusen gemäß DIN 4102 durchgeführt.

Als Flammschutzprüfung wurde der oben beschriebene Brandschachtest an den Platten basierend auf den Beispielen 1 - 10 (eingesetzt als Basismaterial) durchgeführt. Die Ergebnisse sind in der unten gezeigten Tabelle 1 aufgeführt. Die Brandschachtprüfung wurde nach einem Jahr Außenbewitterung wiederholt. Die Außenbewitterung wurde wie oben beschrieben durchgeführt.

**Tabelle 1**

| **Beispiel** | **Gehalt an Flammschutz-additiv in der Basischicht [%]** | **Brandschachttest** | | | **Brandschachttest nach 1 Jahr Bewitterung** | | |
|---|---|---|---|---|---|---|---|
| | | **DIN 4102**-**B1** | **Max. Durchschnittsrauchgastemperatur** [°C] | **Durchschnittliche unzerstörte Restlänge [cm]** | **DIN 4102-B1** | **Max. Durchschnittsrauchgastemperatur [°C]** | **Durchschnittliche unzerstörte Restlänge [cm]** |
| **1** | 0 | bestanden | 113 | 51 | Nicht bestanden | 250 | - |
| **2** | 0,3 % TBBOC | bestanden | 119 | 34,7 | Nicht bestanden | 310 | - |
| **3** | 1,5 % TBBOC | bestanden | 119 | 41 | Nicht bestanden | 257 | - |
| **4** | 3 % TBBOC | bestanden | 113 | 47 | Nicht bestanden | 294 | - |
| **5** | 6 % TBBOC | bestanden | 112 | 51 | Nicht bestanden | 235 | - |
| **6** | 0,15 % BDP | bestanden | 108 | 50 | bestanden | 158 | 45 |
| **7** | 0,75 % BDP | bestanden | 121 | 48 | bestanden | 150 | 42 |
| **8** | 1,5 % BDP | bestanden | 119 | 51 | bestanden | 137 | 44 |
| **9** | 3 % BDP | bestanden | 117 | 47 | bestanden | 133 | 43 |
| **10** | 7,5 % BDP | bestanden | 116 | 46 | Nicht bestanden | 115 | - |

Wie aus Tabelle 1 ersichtlich, bestehen nur die erfindungsgemäßen Stegplatten die relevanten Flammschutzprüfungen nach Bewitterung. Überraschenderweise bestehen jedoch die anderen Platten, auch mit hohen Konzentrationen des Flammschutzmittels, die entsprechenden Flammschutzprüfungen nach der Bewitterung nicht.

## Patentansprüche

1. Platten für den Bau- und Konstruktionsbereich enthaltend eine Basisschicht aus Polycarbonat und 0,05 - 6 Gew.-%, bezogen auf die Gesamtzusammensetzung der Basisschicht, eines Flammschutzmittels, enthaltend mindestens eine Phosphorverbindung der allgemeinen Formel 1 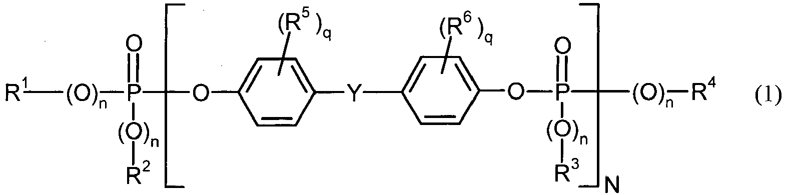 worin
R¹, R², R³ und R⁴, unabhängig voneinander gegebenenfalls durch Halogen substituiertes C₁-C₈-Alkyl, jeweils gegebenenfalls durch Halogen und bzw. oder Alkyl substituiertes C₅-C₆-Cycloalkyl, C₆-C₁₀-Aryl oder C₇-C₁₂-Aralkyl,
n unabhängig voneinander 0 oder 1,
q unabhängig voneinander 0, 1, 2, 3 oder 4,
bedeuten und
N 0, 60 bis 4,00, vorzugsweise 0,90 bis 2,50, insbesondere 1,00 bis 1,15 ist,
R⁵ und R⁶ unabhängig voneinander C₁-C₄-Alkyl, vorzugsweise Methyl oder Halogen, vorzugsweise Chlor und/oder Brom bedeuten, und
Y C₁-C₇-Alkyliden, C₁-C₇-Alkylen, C₅-C₁₂₋Cycloalkylen, C₅-C₁₂-Cycloalkyliden,-O-, -S-, -SO-, -SO₂-, -CO- oder einen Rest der Formel (2) oder (3) 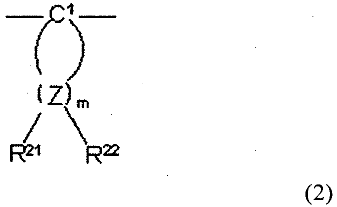 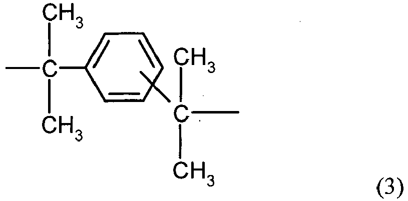 mit
Z = Kohlenstoff und
R²¹ und R²² für jedes Z individuell wählbar, unabhängig voneinander Wasserstoff oder C1-C6-Alkyl, vorzugsweise Wasserstoff, Methyl oder Ethyl,
m eine ganze Zahl von 4 bis 7, bevorzugt 4 oder 5,
mit der Maßgabe, dass an mindestens einem Atom Z R²¹ und R²² gleichzeitig Alkyl sind, bedeutet,
wobei das Polycarbonat eine Mischung aus linearem und verzweigtem Polycarbonat ist und wobei der lineare Polycarbonatanteil mindestens 40 Gew.-%, bezogen auf das Gesamtpolycarbonatgewicht, beträgt

2. Platte gemäß Anspruch 1, wobei das Polycarbonat ausgewählt ist aus einer oder mehreren Verbindungen der Gruppe enthaltend Homopolycarbonate, Copolycarbonate und thermoplastische Polyestercarbonate.

3. Platte gemäß einem der Ansprüche 1 und 2, wobei die Bisphenole zur Herstellung des Polycarbonats ausgewählt sind aus einer oder mehrerer Verbindungen der Gruppe enthaltend Bisphenol-A, Tetraalkylbisphenol-A, 4,4-(meta-Phenylendiisopropyl)¬diphenol (Bisphenol M), 4,4-(para-Phenylendiisopropyl)diphenol, N-Phenyl-Isatinbisphenol, 1,1-Bis-(4-hydro¬xy¬phenyl)-3,3,5-trimethylcyclohexan, Bisphenole vom Typ der 2-Hydrocarbyl-3,3-bis(4-hydroxyaryl)phthalimidine.

4. Platte gemäß einem der Ansprüche 1 und 2, wobei die Basisschicht aus Homopolycarbonat auf Basis Bisphenol-A oder Copolycarbonat auf der Basis der Monomere Bisphenol-A und 1,1-Bis-(4-hydroxyphenyl)-3,3,5-trimethylcyclohexan ist.

5. Platte gemäß einem der Ansprüche 1 bis 4, wobei die Platte zusätzlich einseitig oder zweiseitig mit mindestens einer Coextrusionsschicht enthaltend UV-Absorber beschichtet ist.

6. Platte gemäß Anspruch 5, wobei der UV-Absorber ausgewählt ist aus einem oder mehreren Verbindungen der Gruppe enthaltend Triazine, Benztriazole, Cyanacrylate und Bismalonate und die Basisschicht keinen UV-Absorber oder einen oder mehrere UV-Absorber ausgewählt aus der Gruppe enthaltend Benztriazole, Cyanacrylate und Bismalonate enthält.

7. Platte gemäß einem der Ansprüche 1 bis 6, wobei es sich um eine Stegmehrfachplatte handelt.

8. Platte gemäß Anspruch 7, wobei das Flächengewicht der Stegplatte größer als 2,4 kg/m² ist.

9. Platte gemäß Anspruch 7 oder 8, wobei es sich um eine Stegplatte der folgenden Geometrie handelt:
a. 3fach Stegplatte mit einer Dicke von 12 bis 20 mm und einem Stegabstand von 12 bis 20 mm,
b. 6fach Stegplatte mit einer Dicke von 12 bis 22 mm und einem Stegabstand von 12 bis 22 mm,
c. 3fach Stegplatte mit einem X-Profil und einer Dicke von 12 bis 20 mm wobei die X-Struktur eine Breite von 20 bis 30 mm aufweist, die von 3 Stegen gebildet wird.
d. 5fach Stegplatte mit einem X-Profil und einer Dicke von 20 bis 50 mm handelt wobei die X-Struktur eine Breite von 20 bis 30 mm aufweist, die von 3 Stegen gebildet wird.
e. 5fach Stegplatte mit einem M-Profil und einer Dicke von 20 bis 50 mm und die Stege einen Abstand von 15 bis 25 mm aufweisen.

10. Platte gemäß einem der Ansprüche 1-9, **dadurch gekennzeichnet, dass** mindestens eine Phosphorverbindung ein Bisphenol-A-diphosphat ist.

11. Verwendung einer Platte gemäß einer der vorangehenden Ansprüche als Architekturverscheibung, in Bedachungen und Verglasungen von Schwimmbädern, Carports, Gewächshäusern, Industriekomplexen und privaten Gebäuden, sowie als Lärmschutz- oder Sichtschutzwand.

## Claims

1. Sheets for the building and construction sector containing a base layer of polycarbonate and 0.05 - 6 wt.%, based on the total composition of the base layer, of a flame retardant, containing at least one phosphorus compound of general formula 1 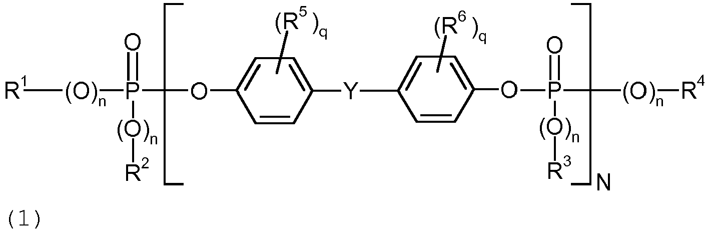 wherein
R¹, R², R³ and R⁴, independently of one another, signify optionally halogen-substituted C₁-C₈ alkyl or, each optionally halogen- and/or alkyl-substituted C₅-C₆ cycloalkyl, C₆-C₁₀ aryl or C₇-C₁₂ aralkyl,
n independently of one another signify 0 or 1,
q independently of one another signify 0, 1, 2, 3 or 4,
and
N is 0.60 to 4.00, preferably 0.90 to 2.50, in particular 1.00 to 1.15,
R⁵ and R⁶, independently of one another, signify C₁-C₄ alkyl, preferably methyl or halogen, preferably chlorine and/or bromine, and
Y signifies C₁-C₇ alkylidene, C₁-C₇ alkylene, C₅-C₁₂ cycloalkylene, C₅-C₁₂ cycloalkylidene, -O-, -S-, -SO-, -SO₂-, -CO- or a residue of formula (2) or (3) 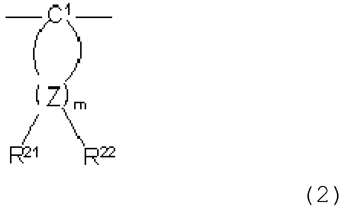 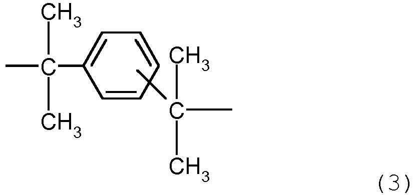 with
Z = carbon and
R²¹ and R²² can be selected for each Z individually and, independently of one another, signify hydrogen or C1-C6 alkyl, preferably hydrogen, methyl or ethyl,
m signifies an integer from 4 to 7, preferably 4 or 5,
with the proviso that, on at least one Z atom, R²¹ and R²² are simultaneously alkyl,
wherein the polycarbonate is a mixture of linear and branched polycarbonate and wherein the linear polycarbonate content is at least 40 wt.%, based on the total polycarbonate weight.

2. The sheet according to claim 1, wherein the polycarbonate is selected from one or more compounds from the group containing homopolycarbonates, copolycarbonates and thermoplastic polyester carbonates.

3. The sheet according to one of claims 1 and 2, wherein the bisphenols for producing the polycarbonate are selected from one or more compounds from the group comprising bisphenol A, tetraalkyl bisphenol A, 4,4-(meta-phenylene diisopropyl) diphenol (bisphenol M), 4,4-(para-phenylene diisopropyl) diphenol, N-phenylisatin bisphenol, 1,1-bis(4-hydroxyphenyl)-3,3,5-trimethylcyclohexane, bisphenols of the type of the 2-hydrocarbyl-3,3-bis(4-hydroxyaryl) phthalimidines.

4. The sheet according to one of claims 1 and 2, wherein the base layer is made of homopolycarbonate based on bisphenol A or copolycarbonate based on the monomers bisphenol A and 1,1-bis(4-hydroxyphenyl)-3,3,5-trimethylcyclohexane.

5. The sheet according to one of claims 1 to 4, wherein the sheet is additionally coated on one or both sides with at least one coextrusion layer containing UV absorber.

6. The sheet according to claim 5, wherein the UV absorber is selected from one or more compounds from the group containing triazines, benzotriazoles, cyanoacrylates and bismalonates and the base layer contains no UV absorbers or one or more UV absorbers selected from the group containing benzotriazoles, cyanoacrylates and bismalonates.

7. The sheet according to one of claims 1 to 6, wherein it is a multiple-wall sheet.

8. The sheet according to claim 7, wherein the weight per unit area of the multi-wall sheet is greater than 2.4 kg/m².

9. The sheet according to claim 7 or 8, wherein it is a multi-wall sheet of the following geometry:
a. 3-wall sheet with a thickness of 12 to 20 mm and a rib spacing of 12 to 20 mm,
b. 6-wall sheet with a thickness of 12 to 22 mm and a rib spacing of 12 to 22 mm,
c. 3-wall sheet with an X profile and a thickness of 12 to 20 mm wherein the X structure has a width of 20 to 30 mm, which is made up of 3 ribs.
d. 5-wall sheet with an X profile and a thickness of 20 to 50 mm wherein the X structure has a width of 20 to 30 mm, which is made up of 3 ribs.
e. 5-wall sheet with an M profile and a thickness of 20 to 50 mm and the ribs have a spacing of 15 to 25 mm.

10. The sheet according to one of claims 1-9, **characterised in that** at least one phosphorus compound is a bisphenol A diphosphate.

11. Use of a sheet according to one of the preceding claims as architectural glazing in roofing and glazing for swimming pools, carports, greenhouses, industrial complexes and private buildings, and as a noise protection wall or screen wall.

## Revendications

1. Plaques pour le domaine des bâtiments et de la construction, contenant une couche de base en polycarbonate et 0,05-6% en poids, par rapport à la composition totale de la couche de base, d'un agent ignifuge, contenant au moins un composé phosphoré de formule générale 1 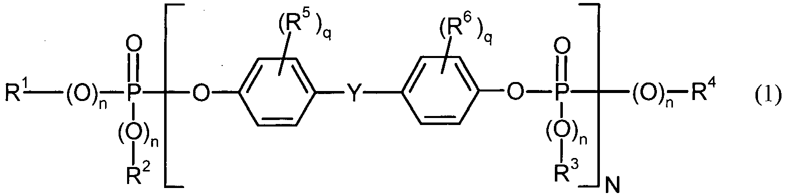 dans laquelle
R¹, R², R³ et R⁴, signifient, indépendamment les uns des autres, C₁-C₈-alkyle le cas échéant substitué par halogène ; C₅-C₆-cycloalkyle, C₆-C₁₀-aryle ou C₇-C₁₂-aralkyle à chaque fois le cas échéant substitué par halogène et/ou par alkyle,
n vaut, indépendamment, 0 ou 1,
q vaut, indépendamment, 0, 1, 2, 3 ou 4,
et N vaut 0,60 à 4,00, de préférence 0,90 à 2,50, en particulier 1,00 à 1,15,
R⁵ et R⁶ signifient, indépendamment l'un de l'autre, C₁-C₄-alkyle, de préférence méthyle, ou halogène, de préférence chlore et/ou brome,
et Y signifie C₁-C₇-alkylidène, C₁-C₇-alkylène, C₅-C₁₂-cycloalkylène, C₅-C₁₂-cycloalkylidène, -O-, -S- , -SO-, -SO₂-, -CO- ou un radical de formule (2) ou (3) 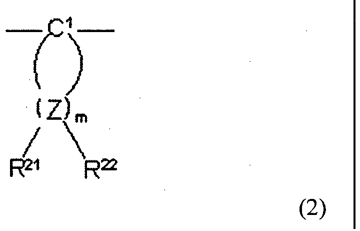 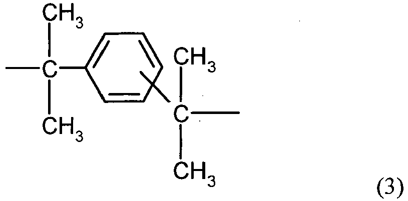
dans laquelle
Z = carbone et
R²¹ et R²² signifient, en pouvant être choisis individuellement pour chaque Z, indépendamment l'un de l'autre, hydrogène ou C₁-C₆-alkyle, de préférence hydrogène, méthyle ou éthyle,
m vaut un nombre entier de 4 à 7, de préférence 4 ou 5,
à condition que sur au moins un atome Z, R²¹ et R²² représentent simultanément alkyle,
le polycarbonate étant un mélange de polycarbonate linéaire et ramifié et la proportion de polycarbonate linéaire représentant au moins 40% en poids par rapport au poids total de polycarbonate.

2. Plaque selon la revendication 1, le polycarbonate étant choisi parmi un ou plusieurs composés du groupe contenant les homopolycarbonates, les copolycarbonates et les polyestercarbonates thermoplastiques.

3. Plaque selon l'une quelconque des revendications 1 et 2, les bisphénols pour la préparation du polycarbonate étant choisis parmi un ou plusieurs composés du groupe contenant le bisphénol-A, le tétraalkylbisphénol-A, le 4,4-(méta-phénylènediisopropyl)-diphénol (bisphénol M), le 4,4-(para-phénylènediisopropyl)diphénol, le N-phényl-isatine-bisphénol, le 1,1-bis-(4-hydroxyphényl)-3,3,5-triméthylcyclohexane, les bisphénols du type des 2-hydrocarbyl-3,3-bis(4-hydroxyaryl)phtalimidines.

4. Plaque selon l'une quelconque des revendications 1 et 2, la couche de base étant en homopolycarbonate à base de bisphénol-A ou en copolycarbonate à base des monomères bisphénol-A et 1,1-bis-(4-hydroxyphényl)-3,3,5-triméthylcyclohexane.

5. Plaque selon l'une quelconque des revendications 1 à 4, la plaque étant en outre revêtue sur une face ou sur deux faces par au moins une couche de coextrusion contenant un absorbant des UV.

6. Plaque selon la revendication 5, l'absorbant des UV étant choisi parmi un ou plusieurs composés du groupe contenant les triazines, les benzotriazoles, les cyanoacrylates et les bis-malonates et la couche de base ne contenant pas d'absorbant des UV ou contenant un ou plusieurs absorbants des UV choisis dans le groupe contenant les benzotriazoles, les cyanoacrylates et les bis-malonates.

7. Plaque selon l'une quelconque des revendications 1 à 6, la plaque étant une plaque multicouche entretoisée.

8. Plaques selon la revendication 7, le poids surfacique de la plaque entretoisée étant supérieur à 2,4 kg/m².

9. Plaque selon la revendication 7 ou 8, la plaque étant une plaque entretoisée présentant la géométrie suivante :
a. triple plaque entretoisée d'une épaisseur de 12 à 20 mm et présentant une distance entre les entretoises de 12 à 20 mm,
b. sextuple plaque entretoisée d'une épaisseur de 12 à 22 mm et présentant une distance entre les entretoises de 12 à 22 mm,
c. triple plaque entretoisée présentant un profil en X et une épaisseur de 12 à 20 mm, la structure en X présentant une largeur de 20 à 30 mm, qui est formée par 3 entretoises,
d. quintuple plaque entretoisée présentant un profil en X et une épaisseur de 20 à 50 mm, la structure en X présentant une largeur de 20 à 30 mm, qui est formée par 3 entretoises,
e. quintuple plaque entretoisée présentant un profil en M et une épaisseur de 20 à 50 mm et les entretoises présentant une distance de 15 à 25 mm.

10. Plaque selon l'une quelconque des revendications 1-9, **caractérisée en ce qu'**au moins un composé phosphoré est un diphosphate de bisphénol-A.

11. Utilisation d'une plaque selon l'une quelconque des revendications précédentes comme vitrage architectonique dans les toitures et les vitres de piscines, d'abris d'auto, de serres, de complexes industriels et de bâtiments privés, ainsi que comme paroi antibruit ou de protection visuelle.
